# EUROPEAN PATENT APPLICATION

(11) **EP 2 357 587 A2**
(43) Date of publication of application: **17.08.2011**
(21) Application number: 10196101.9
(22) Date of filing: 21.12.2010
(51) Int. Cl.: G06F 21/02

(54) **Secure cache memory architecture**

(30) Priority: 22.12.2009 US 645190
(71) Applicant: NXP B.V., 5656 AG Eindhoven (NL)
(72) Inventor: Kursawe, Klaus, 5656 AE, Eindhoven (NL)
(74) Representative: Krott, Michel

(57) **Abstract**

A variety of circuits, methods and devices are implemented for secure storage of sensitive data in a computing system. A first dataset that is stored in main memory is accessed and a cache memory is configured to maintain logical consistency between the main memory and the cache. In response to determining that a second dataset is a sensitive dataset, the cache memory is directed to store the second dataset in a memory location of the cache memory without maintaining logical consistency with the dataset and main memory.

## Description

The present invention relates generally to memory storage in a computing architecture, and more specifically, to cache memory.

Cryptography methods and algorithms have been used to protect sensitive data from unauthorized access. There exists a vast array of different implementations of such cryptography. For instance, some cryptography methods use one or more keys to encrypt and decrypt the data, as well as for integrity protection and authentication.

Digital rights management(DRM) is generally used to describe security measures that can be used to impose limitations on the use of hardware, copyrighted content and various other uses of digital devices and content. DRM can be used to prevent unauthorized modification and/or access to the file or device. This is sometimes implemented using serial numbers or keyfiles. Often the security of the cryptography method relies upon keeping such keyfiles private.

A digital encryption technique includes the Data Encryption Standard (DES). DES, however, has been widely viewed as insecure due in part to the rapid improvement of processing power enabling brute force methods of breaking the encryption code. An example successor to DES is the Advanced Encryption Standard (AES), which includes several different levels of security including AES-128, AES-192 and AES-256. AES provides complex ciphers and is much more resistant to brute-force attacks as purely random attempts to determine the key lead to prohibitively long processing times; however, more intelligent methods have shown potential weaknesses in some implementations of AES and other cryptographic ciphers. For instance, some attacks use information gleaned from monitoring of the system implementing the cryptography technique *(e.g.,* side-channel attacks) to obtain information about the cryptographic keys and thus break the cipher.

The present invention is exemplified in a number of implementations and applications, some of which are summarized below.

Consistent with an example embodiment of the present invention, a method is provided for secure storage of sensitive data in a computing system having a processor and a memory system that includes a main memory and a cache memory. A first dataset that is stored in main memory is accessed and a cache memory is configured to maintain logical consistency between the main memory and the cache. In response to determining that a second dataset is a sensitive dataset, the cache memory is directed to store the second dataset in a memory location of the cache memory without maintaining logical consistency with the dataset and main memory.

In another example embodiment, a computer processing system is provided. The system is characterized by at least one central processor and a memory architecture that includes plurality of memory circuits. The memory architecture is configured to cache data stored in a memory circuit of a lower hierarchical level. The memory circuit of the lowest hierarchical level is configured to operate as non-cache memory. In response to secure datasets to be stored, control circuitry configures the memory architecture to operate a first memory circuit of the plurality of memory circuits as the lowest hierarchical level. In response to non-secure datasets to be stored, the control circuitry configures the memory architecture to operate the first memory circuit as a hierarchical level above the lowest level, and a second memory circuit of the plurality of memory circuits as the lowest level memory circuit.

In yet another example embodiment, a method is provided for accessing memory of a computing system. A cache control policy for a cache memory is configured to enable write-out and eviction. A first checksum value is generated from a first dataset stored at a target location of main memory. The first checksum value is stored in a cache memory of the computing system. The cache control policy for the cache memory is configured to disable write-out and eviction of the first checksum value. A second dataset stored at target location of main memory is fetched and a second checksum value is generated from the second dataset. The first checksum is fetched from the cache memory and compared to the second checksum. The second dataset is validated in response to the first checksum being equal to the second checksum.

The above summary is not intended to describe each embodiment or every implementation of the present disclosure. The figures and detailed description that follow more particularly exemplify various embodiments.

The invention may be more completely understood in consideration of the following detailed description of various embodiments of the invention in connection with the accompanying drawings, in which:
Fig. 1 shows a block diagram of a cache-memory architecture with two levels of cache memory, consistent with an embodiment of the present invention;
Fig. 2 shows a flowchart of a process to configure cache memory for the secure storage of sensitive data, consistent with an embodiment of the present invention;
Fig. 3 shows a block diagram of a look-through cache arrangement that may be configured in accordance with various embodiments of the present invention;
Fig. 4 shows a block diagram of a look-through cache arrangement configured with hardware to prevent sensitive data from being written to the data bus, consistent with an embodiment of the present invention; and
Fig. 5 shows a flowchart of a process to authenticate stored data in accordance with various embodiments of the present invention.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention including aspects defined by the appended claims.

The present invention is believed to be applicable to a variety of different types of processes, devices and arrangements implementing cache memory. While the present invention is not necessarily so limited, various aspects of the invention may be appreciated through a discussion of examples using this context.

Various embodiments of the present invention dynamically implement secure memory using cache memory included in a computing architecture. Cache memory is presented with a dataset to be stored in the cache. In response to determining that the dataset contains sensitive data, the cache memory is operated as non-cache memory with respect to the dataset stored in the cache memory. When operated as non-cache memory, the sensitive data is stored in the cache as if it were stored in main memory. For example, data in cache memory may be written out to a main memory during operation, whereas data stored in cache memory that is configured to operate as non-cache memory is not written out to a main memory. In this manner, sensitive data is prevented from being written to non-secure main memory.

As a result of differing speed improvements seen for CPUs and memory, memory access has become a major bottleneck in modem computing. As a consequence, many modern processor architectures support one or more levels of cache memory, which are implemented close to or within the CPU itself. Aspects of the present invention recognize that the close integration of cache memory to the processor makes the cache memory substantially harder to physically access relative to the main memory. This provides some level of intrusion protection because the signal lines between the cache memory and the processor cannot be physically probed as easily to monitor data accessed.

Several embodiments of the present invention provide methods to configure the cache memory policy to securely store sensitive data within the cache memory. In order to implement secure storage in cache memory, the cache memory is configured to prevent sensitive data from being written out to main memory. Many computing architectures include control logic that determines various cache memory policies and options such as the write-policy or the eviction policy implemented to determine which cached datasets are evicted from the cache memory when it gets full. The control logic can be configured to implement secure cache memory in a number of different ways. As discussed in the description and examples of various embodiments, below, sensitive data may be identified, relative to non-sensitive data in a number of ways including, but not limited to, the use of special write instructions, a status field, non-existent addresses, reserved addresses, status messaging, etc. If the status indicates that the dataset is sensitive, the dataset can be stored in cache and the cache can be configured to prevent the dataset from being written out to main memory.

In particular instances, the sensitive data need not be limited to data that is secret *per se.* For instance, many ciphers (*e.g*., AES) use a set of tables that are publically known (*e.g.,* part of the AES specification), and thus the content of the tables is sensitive in itself An attacker, however, can monitor access to the tables and use this information to derive the key the cipher used. Thus, the access pattern in which the tables are looked at is sensitive and the tables are therefore also indicated sensitive when being actively used.

In one embodiment, the cache memory policy implemented is configured to store data as "cache only" in response to determining the data is sensitive data. In such an embodiment, when the cache controller receives sensitive data, the dataset is stored in cache memory and the cache memory is configured to operate as non-cache memory for the stored dataset. Data bits indicating the state of the dataset are set to "cache only." In configuring the cache memory to operate as non-cachable memory for the dataset, the cache controller is configured to disable write-through and write-back for the sensitive dataset stored in cache memory. In some embodiments dataset eviction is also disabled for the dataset.

Many computer architectures include a cache memory (cache) located in close physical proximity to a processer. The cache memory stores duplicate values of a subset of data items present in a main memory. Though the duplicate values can be temporarily different, the effect of the overall system is that consistency between the values is maintained for accesses to the dataset. In this sense, the data stored in the cache memory is logically consistent to a corresponding location within a lower-level memory. As used herein, data that resides in a memory is considered logically consistent to another memory when data is written to the other memory to maintain coherency. Conversely, data that resides in a first memory is not logically consistent to another memory where the data is not written to the other memory despite changes that may have been made to the data residing in the first memory.

Aspects of the present invention relate to using cache memory as both a memory that is logically consistent with main memory (*e.g.,* for non-sensitive data) and as a memory that is effectively not logically consistent with main memory (*e.g.,* for sensitive data). For instance, by preventing sensitive data from being written to main memory, the logical consistency from cache to main memory is thereby broken for this sensitive data. As such, the cache memory can be dynamically configured for operation in different modes.

A result of including a cache memory in closer proximity to the processor is that signal propagation time between the processor and the cache memory is reduced and faster memory can be used. Thus, the cached copies may be accessed by the processor unit faster than if the original data is stored in main memory. For data accessed frequently by the processor, the use of cache memory can result in significant time savings for the computing architecture. Aspects of the present invention recognize that additional aspects of such cache memory can be useful for storing sensitive data, such as data associated with cryptography and/or DRM.

For instance, embodiments of the present invention relate to dynamically configuring cache memory in one of two modes. In a first/cache mode, the cache memory stores data for access by the processor. If the data is modified relative to main memory and/or lower levels of cache, then the cache memory maintains data integrity by eventually synchronizing/writing the modified data across the various levels of memory. In a secure mode, the cache memory stores secure data for access by the processor in a manner similar to the cache mode. In the secure mode, however, the cache memory does not synchronize/write modified data to main memory or lower levels of cache. As discussed herein, the main memory and/or lower levels of cache memory can sometimes be vulnerable to nefarious access. Thus, such an implementation can be particularly useful for storage of data that could compromise the cryptography technique, such as intermediate keys and unencrypted versions of such keys or other data.

Due to the benefits provided by cache memory, many processor architectures support several levels of cache memory, with a first level being considered logically close to the processor and subsequent levels being considered logically further from the processor. Some of these cache memories can be located in physical proximity to the processor or even within the processor chip package or die. Aspects of the present invention recognize that both the logical and physical properties of cache memory implemented in proximity to the processor can be particularly useful for storage of sensitive data.

Embodiments of the present invention lend themselves to various memory and processor architectures. In one such architecture, the system responds to a processor executing a memory read or write instruction by checking the target address to determine whether a copy of the target dataset is currently stored in the first level of cache. When the target data exists in the cache, it is referred to as a cache hit. The system uses cache memory for accesses to the target address, thereby reducing the need to access lower-levels of memory. When the target dataset does not exist in the cache, it is referred to as a cache miss. The target dataset can then be retrieved from lower-level memory. If the target dataset is modified, the data will eventually be written back to lower-level memory. Aspects of the present invention modify such operations of cache memory such that lower-level memory will not have access to secure data stored in the higher-level cache memory.

In certain implementations, a cache hit or miss may be determined by checking if the address of the target memory address is listed in a memory mapping table stored in a portion of the cache memory at the cache level. This mapping table, otherwise known as Tag memory, indicates memory addresses of next lower level memory unit where original copies of cached data are stored. For instance, particular system architectures include both a level-1 (L1) cache memory and level-2 (L2) cache memory. When a cache miss occurs in L1 cache memory, the dataset is retrieved from L2 cache memory for use by the processor and is also stored in the L1 cache. If a cache miss occurs at the L2 cache memory, the dataset is retrieved from main memory or a lower-level cache memory. Aspects of the present invention modify such interactions between different levels of memory to prevent sensitive data from being stored in lower-levels of memory.

In this context, embodiments of the present invention relate to implementations where any number of cache levels can be implemented, with cache misses recursively retrieving the target dataset from the next lower level until the dataset is located. The secure data can be stored at the desired level within the cache memory as determined by system design constraints. For instance, in some computing architecture configurations, one or more levels of cache memory may be physically located within a processor package and/or die. Aspects of the present invention recognize that such physical location for cache memory can be particularly useful for frustrating hardware access attempts (*e.g.,* use of a front-side bus analyzer). For ease of explanation, the various details of cache behavior are explained with reference to cache architectures with one level of cache memory and a main memory unit, however the embodiments of the present invention are not necessarily so limited.

Two example mechanisms for handling cache misses are: look-aside cache and look-through cache. In a look-aside cache arrangement, the processor, cache memory, and main memory are coupled to a common bus. When the processor sends a memory access request, it is received by both the cache memory and main memory. When a cache hit occurs, the cache memory responds with an acknowledgement of the requested data, causing the main memory to ignore the request. When a read miss occurs, the main memory acknowledges the access request because no acknowledgement is sent by the cache memory. Aspects of the present invention relate to a system that identifies memory access requests that are identified as being for sensitive data. For such access requests, the system terminates/prevents memory write requests to the main memory while allowing the cache memory to acknowledge the request. Thus, the secure data can be prevented from being stored in a lower-level memory.

In look-through cache, the cache memory is connected to the processor on a first data bus and to the main memory on a second data bus. All memory access requests are sent from the processor to the cache memory. If a cache miss occurs, the cache memory forwards the memory access request to the main memory on the second bus. Aspects of the present invention relate to a system that inhibits forwarding of write accesses to the main memory for accesses identified as being for sensitive data.

Cache memory is typically smaller than the size of external main memory because the area in close proximity to the processor is limited. Additionally, smaller cache memory sizes have faster indexing and retrieval times. Because cache memory generally cannot store all datasets of the main memory, cached datasets often must be swapped out to make room for new datasets to be cached. The removal of cached values from cache memory is known as eviction. When a new dataset is to be cached to a full cache, a cache controller must select a cached dataset to be evicted. A variety of algorithms can be used to select the dataset to be evicted. These algorithms can be relatively complex as unnecessary evictions can result in increased delays associated with main memory access times. A particular eviction algorithm is referred to as least-recently used (LRU). An LRU functions by evicting datasets that have had the longest time since their last access. Aspects of the present invention relate to inhibiting data evictions for datasets identified as secure data. For instance, secure data can be maintained in an LRU-based eviction scheme by periodically accessing the secure data. In this manner the secure data can be effectively kept in the cache. In a particular implementation, the timing for the periodic access to the secure data can be set according to the worst-case scenario for eviction of the entire cache. This timing can be determined by calculating the time necessary for a series of accesses that collectively would result in eviction of all of (or a set percentage of) the cache memory. In another implementation, the system monitors memory accesses to determine when/if access to the secure data is desired. For instance, the system determines based upon the cache eviction policy, when the secure data is in danger of being evicted and responds by accessing the secure data.

Various computing architectures utilize multiple processors and/or processors with multiple cores. Each processor/core may have a separate cache memory that cannot be viewed by other processors. Alternatively or in addition, one or more cache memories can be shared between processors. The main memory may also be accessible by external devices which do not have access to the cache memory. Because multiple sources can update datasets stored in main memory, cache memory systems implement policies to ensure that values written to cache memory are updated in main memory and vice-versa. This maintains data integrity between the processors. Such maintenance of consistency between cached copies of shared memory resources and between multiple bus masters is referred to as cache coherency. Aspects of the present invention relate to using cache memory to store secure data within a multiple-processor/multiple-core architecture.

When data in cache is modified the modified cached value is used to update the value of the data stored in main memory. Writing data from cache to main memory is referred to as write-out. Various write-policies can be used to determine how data written to cache memory is handled including, but not limited to, write-back and write-through. In a write-through cache, a dataset written to cache memory is immediately written out to update main memory. Aspects of the present invention inhibit such writes for secure data. For instance, the cache/bus controller responsible for writing the data to update main memory is configured to respond to a secure data indication by blocking, terminating or otherwise preventing such writes.

In write-back cache, the cache memory acts as a buffer. When the processor initiates a write cycle the cache memory receives the data and terminates the cycle. The data is written from cache memory to main memory at a later time when the bus is available, typically when the data is evicted from memory. Aspects of the present invention inhibit such writes for secure data. For instance, write-back caches sometimes contain a mechanism to distinguish between data that has been modified and data that has not been modified. In this manner, the system can avoid writing unmodified data unnecessarily to main memory. Aspects of the present invention control the distinguishing mechanism for secure data, thereby blocking, terminating or otherwise preventing writes of the secure data to lower levels of memory.

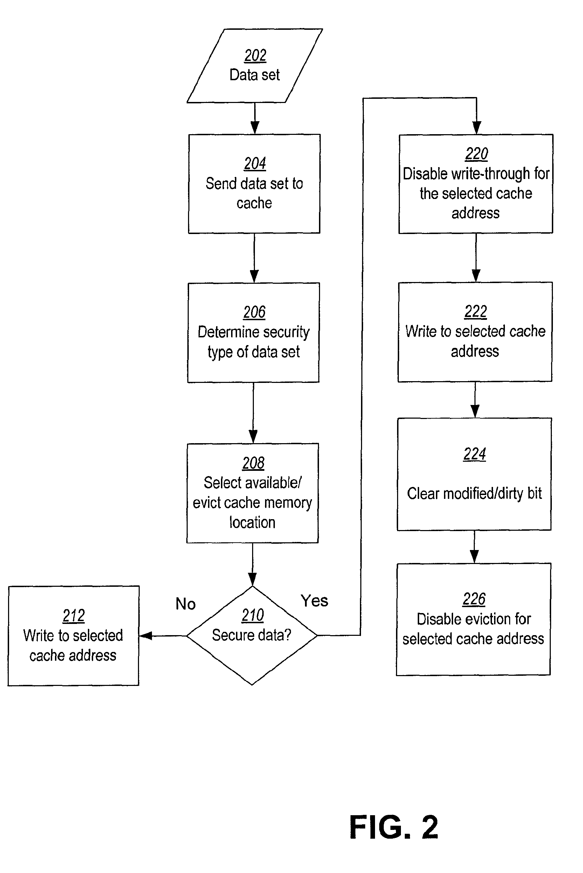

A more particular write-back policy variant is Modified Exclusive Shared Invalid (MESI), named for the four states used for cached datasets. This value is stored in a table of 2-bit entries. The table may be stored in Tag memory (*e.g.,* 210 of Fig. 2) or in a portion of the cache memory (*e.g.,* 206 of Fig. 2). A modified state indicates that the cache memory has been changed from the value in main memory. The modified state is otherwise known as "dirty." Exclusive indicates the dataset is present only in the current cache memory and has not been modified. Shared indicates that this cached dataset may be stored in other cache memories if the value has not been modified. Invalid indicates that this cache line is invalid. Aspects of the present invention relate to clearing or preventing the setting of the dirty bit in response to an indication that particular data is considered secure.

In some implementations, a cache memory that holds a line in the modified state monitors or snoops the data bus for all attempted reads from all of the other caches in the system of the corresponding main memory location. When the cache memory sees a read request for a cached and modified dataset the cache memory forces the read to back off. The modified cached value is written to main memory and the state of the data is changed to the shared state. Aspects of the present invention relate to controlling shared access to secure data. For instance, an attempted access to secure data in a different memory level does not result in the secure data being written. For instance, the attempted access can be aborted without a subsequent write to lower memory levels.

There are many instances where the data items used by one or more applications running on a processing system contain sensitive data items that should not be accessible by other executed applications or hardware connected to the data bus of the system. Security and encryption applications frequently use sensitive data such as secure key values to perform validation, authentication, decryption, etc. Due to the complexity of operating systems and access requirements imposed by direct memory access (DMA) and Joint Test Action Group (JTAG) interfaces it is difficult to ensure exclusive access to secure data within the operating system itself. For example, in order to speed up communication with peripherals, many architectures and operating systems allow external hardware (*e.g.,* the hard disk) to communicate directly with the main memory, without involving the processor at all. Debugging interfaces allow the same access for other purposes, and often are not disabled in the end device. Such access can be exploited to gain access to secure data stored in main-memory, including a complete memory dump, using external hardware connected to a standard I/O port, such as Firewire, Universal Serial Bus (USB), etc. In addition, operating systems cannot guarantee secure protection of data. For example, many operating systems have numerous security weaknesses, and thus also couldn't be trusted to protect cryptographic keys even in the absence of hardware based attacks.

In storing sensitive data, secure memory that does not rely on the operating system to limit access to authorized applications provides additional protection against exploits. However, implementing secure memory as extra hardware can be expensive. For instance, it can be difficult to implement a memory that is secure with respect to direct access to the memory and also with respect to intercepting communication between the memory and the processor. Such implementation can be difficult to achieve in processor architectures not designed to support such a concept. For instance, there may be no simple mechanism for the processor to indicate that certain datasets are to be stored as secure data.

In computing architectures, a cache memory (cache) is often located in close physical proximity to a processer to improve data retrieval times. This cache memory is used to store duplicate values of a subset of data items present in a main memory. Aspects of the present invention recognize that the close integration of cache memory to the processor make sure the cache memory is substantially harder to physically access the main memory. This provides some level of intrusion protection because the signal lines between the cache memory and the processor cannot be physically probed as easily to monitor data accessed.

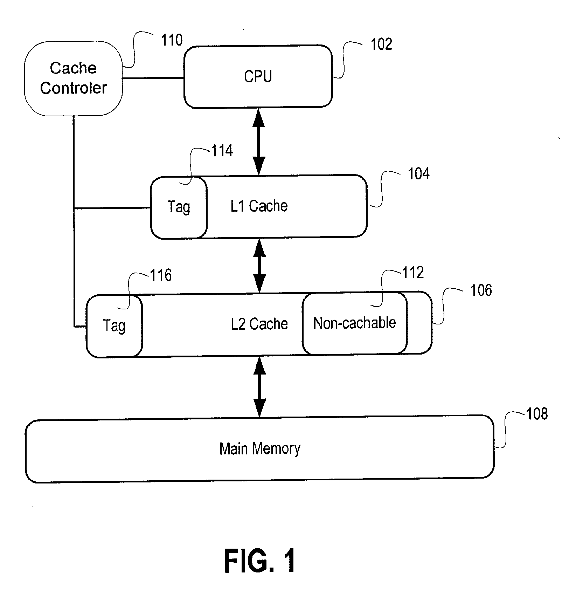

Turning now to the figures, Fig. 1 shows a block diagram of an example computing architecture with two levels of cache configured for secure storage. The architecture includes a processor 102 and a plurality of memory units 104, 106, and 108. The memory units are organized into a hierarchy with each unit configured to cache data from a memory unit of a lower hierarchical level. In an example implementation, memory unit 104 performs as level-1 (L1) cache memory and is configured to cache data from memory unit 106. Memory unit 106 performs as level-2 (L2) cache and is configured to cache data from memory unit 106. Memory unit 108 is the located in the lowest hierarchical level, and is thus configured to operate as non-cache memory, such as a main memory. In this example, cache controller 110 controls when data is written to or removed from L1 and L2 caches.

Tag memory 114 and 116 store addresses of main memory corresponding to each cached dataset. When the cache controller 110 determines a sensitive dataset is written to cache, the cache controller 110 configures the cache to perform as non-cache memory with respect to the sensitive data set. In the example shown, sensitive data 112 has been written to a portion of L2 cache 106. In response, the cache controller 110 configures portion 112 to be non-cache by storing data in Tag memory 116 along with the corresponding memory address. The stored data indicates that write-through and write-back are disabled for sensitive data 112. Before any dataset in the cache is to be written out to main memory 108, cache controller 110 first checks the status of the dataset stored in Tag memory 114 and 116. If sensitive data 112 is to be evicted, cache controller would check Tag memory 116 and determine 112 is sensitive data. In response, the cache controller can evict the sensitive data without writing the data to main memory by clearing Tag memory 116 entries associated with sensitive data 112. The sensitive data 112 may be overwritten at a later time by other cached data. In an alternative implementation, the system can expressly overwrite the cached data by writing a dummy dataset to the address location of the secure data.

Consistent with the memory hierarchy of Fig. 1, embodiments of the present invention are directed toward secure storage of sensitive data in a computing system having a plurality of memory units organized in a hierarchy. The memory units are configured to cache data from a memory unit of a lower hierarchical level, the memory unit of the lowest hierarchical level configured to operate as an uncached memory. When a dataset is presented to one of the memory units located in a level of the hierarchy above the lowest level for storage therein, it is determined whether the dataset is a sensitive dataset. In response to determining the dataset is a sensitive dataset, the one of the memory units is configured to operate as the lowest level memory unit with respect to the dataset.

In another embodiment, the cache policy may be configured to prevent sensitive data from being written to main memory by setting the cache to operate in write-back mode with respect to the sensitive data and preventing the dirty bit corresponding to the sensitive data from being set when the sensitive data is modified. In another embodiment, the dirty bit can be cleared after sensitive data has been written. If the sensitive data is later evicted from cache memory, the dirty-bit will indicate that the sensitive dataset has not been modified and lower levels of (main) memory will not be updated with the sensitive dataset. In this manner, sensitive data can be maintained exclusively at the desired memory level and thereby prevented from being written to main memory.

Fig. 2 shows a flowchart of an example process for secure storage of a dataset in cache memory. A dataset 202 to be stored in secure cache is sent to cache at step 204. The security type of the dataset is determined at step 206. Cache memory location to store the dataset is selected at step 208. If the cache is full, a non-secure dataset is selected and evicted. If dataset 202 is determined to be non-sensitive data, the dataset is stored in the selected memory location at step 212. If the dataset is determined to be sensitive data, the cache is configured to disable write-through for the selected memory address at step 220. Dataset 202 is stored in selected address in cache at step 222. In this example, write-back is disabled by clearing the modified/dirty bit at step 224. In this example, eviction is also disabled for the selected memory address at step 226.

In other embodiments, a software interface configures read/write instructions to store sensitive data in a non-existent or reserved memory location. Software applications may include instructions to read or write to specific memory addresses accessible from the main data bus. For sensitive data, these instructions are set to write to a non-existent location. When the processor executes an initial write instruction, the sensitive dataset is written to cache memory as would be done under normal operation of the cache and the non-existent address is stored in Tag memory of the cache. If the write policy of the cache later triggers the data set to be written out to main memory, the write fails because of the invalid memory location.

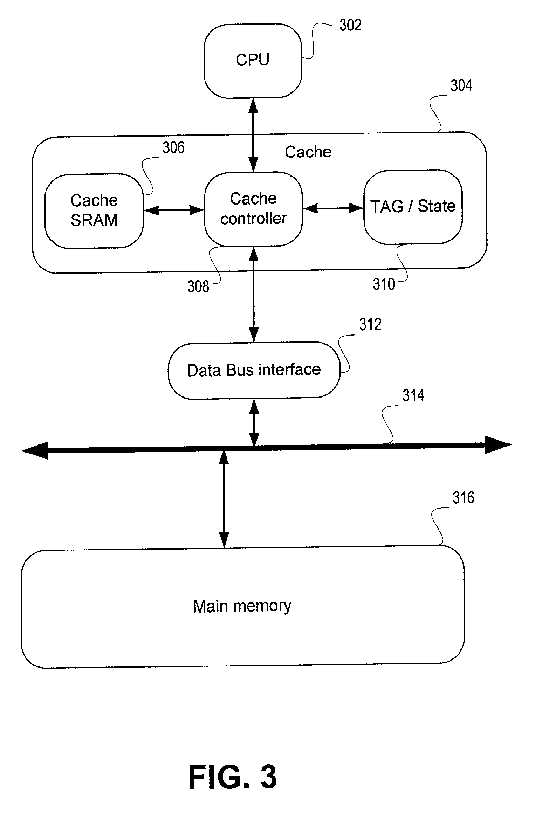

Fig. 3 shows a block diagram of an example look-through cache computing architecture. The computing architecture includes a processor 302 coupled to a cache 304. The cache includes a cache controller 308, cache static random access memory (SRAM) 306, and a TAG memory unit 310 for storing control of cache entries such as address mapping information. Cache 304 sends and receives data to and from main memory 316 via data bus 314 and data bus interface 312. When secured data is evicted or written out of the cache, a memory access request is generated by the cache and sent to the data bus interface. If a non-existent address is used to prevent data from being written out to main memory, the data bus interface will recognize the address as invalid and prevent the dataset from being written to the location and may signal the cache of the error. In this manner, the sensitive data is prevented from being written to unsecured main memory.

A number of different addresses can be used to prevent the secure memory from being written to the target address in main memory. In addition to non-existent addresses that do not correspond to any hardware connected to the data bus, reserved addresses can be used to prevent write-out. Some portion of the address space may be reserved for use by specific hardware. For example, in some systems the address for accessing a video card's frame buffer may be reserved as a read-only memory address. Likewise, addresses of I/O signal lines configured for input only may have memory buffer addresses reserved to store input received on each of the signal lines. Write requests to these address are recognized as invalid and can be used to prevent sensitive data from being written to main memory. Referring back to the example shown in Fig. 3, the write to reserved memory location would be prevented by data bus interface 312. In order to determine which addresses are reserved, the data bus interface 312 looks up the status of each address in a memory address table (not shown). If an address is indicated as reserved, memory access requests to the address are discarded by data bus interface.

In some embodiments, specific memory addresses, although valid and unreserved, can be used to signal that the data set is sensitive data. For example, the highest or last address line on the address bus can be used to signal that an unauthorized write operation is being performed; any signal on this line would then tell the bus controller to stop any data from being put on the bus. Alternately, an instruction may be provided for software applications to define memory addresses that are to be used to indicate sensitive data. In other embodiments, the memory write instructions may include data bits indicating whether the dataset is to be written to secure or unsecure memory. For example, a write instruction may include a field indicating the register holding dataset to be written, a field indicating target address, and a field indicating the status of the dataset. If the status indicates that the dataset is sensitive, the dataset can be stored in cache and the cache can be configured to prevent the dataset from being written out to main memory.

In yet other embodiments of the present invention, hardware may be included between the caches and the data-bus to the filter sensitive data from being written onto the bus while forwarding non-sensitive data. This hardware can perform various other secure functions, such as memory encryption and authentication. Such hardware also prevents the dataset stored in secure cache from being written to main memory. The integration of multiple functions into hardware can be particularly useful for controlling costs associated with the system architecture (*e.g.,* physical space costs, power costs, transistor costs and/or monetary costs).

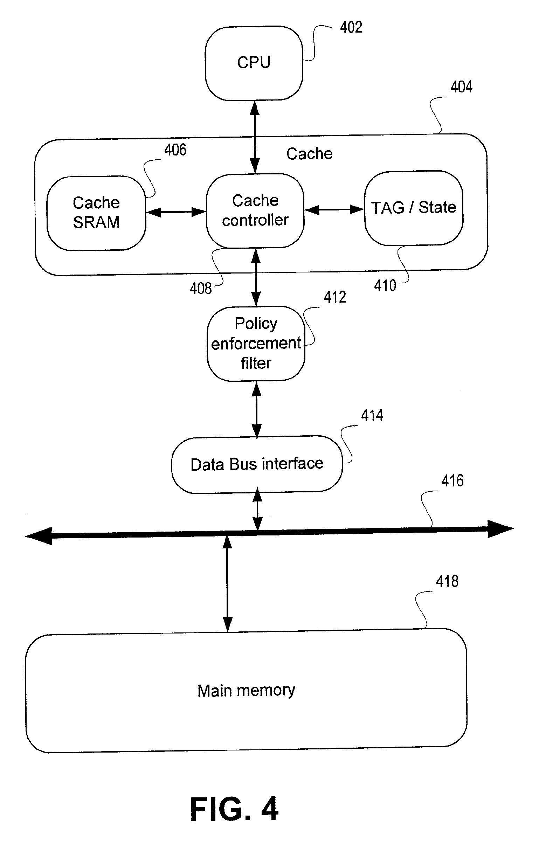

Fig. 4 shows an example look through cache computing architecture with policy enforcement hardware added to prevent secure datasets from being written to the data bus. The computing architecture includes a processor 402 coupled to a cache 404. The cache includes a cache controller 408; cache SRAM 406; and a Tag memory unit 410 for storing address mapping, state and dirty bit information. The example architecture includes main memory 418 coupled to a data bus 416 and a data bus interface 414 to send and receive data from the bus. A policy enforcement filter 412 is added between the cache 404 and data bus interface 414. The policy enforcement filter is configured to identify and prevent secure data from being passed to the data bus interface. Non-secure data received from cache 404 is forwarded to the data bus interface 414 by the policy enforcement filter. One embodiment of the invention may alternately configure data bus interface 414 to perform the functions provided by the policy enforcement filter. As discussed above, a number of methods can be used to indicate to the policy enforcement filter 412 which datasets contain sensitive data including, but not limited to, non-existent addresses, reserved addresses, write instructions with a status field, etc.

Although example implementations have been described within the context of a look-through cache, the various embodiments of the invention are equally applicable to various look aside cache arrangements as well. As described above, in a look aside cache architecture the cache and the processor are both connected to the data bus. Datasets are written from the processor to cache via the data bus. Because datasets are passed over the bus, the data is not protected from physical probing of the bus to monitor data. However, access to cache is restricted by giving the cache a restricted address. Because the address is restricted, unauthorized hardware cannot write to or read from the cache via direct memory access (DMA). Therefore, by preventing sensitive data from being written to the main memory in accordance with various embodiments, DMA access to sensitive data stored in the cache can be prevented.

Some applications, where re-computation of data is not possible or is undesirable, it can be beneficial to prevent eviction of sensitive data stored in cache. According to several embodiments of the present invention eviction can be prevented or disabled to prevent sensitive data from being discarded. In one embodiment, the cache policy implemented is configured to store data indicating the sensitive dataset is non-evictable in response to determining the data is sensitive data. In such an embodiment, the eviction policy of the cache controller is configured to select from non-sensitive datasets when eviction is required. The non-eviction data may be stored for each dataset in a manner similar to storage of dirty bits. This information may be stored in Tag memory or in a portion of the cache memory. In one possible implementation, non-eviction status may be implicit in another state indicating sensitive datasets. For example, a cache controller may store information indicating a dataset is "cache only" in response to determining the data is sensitive data. The cache policy may be implemented to disable eviction of "cache only" dataset in addition to disabling write-back.

In another embodiment, the processor, or software can prevent a sensitive dataset from being evicted from cache by periodically sending read requests for the sensitive data. This is particularly useful for caches implementing a least recently used (LRU) eviction policy. In an LRU policy, each time a cached dataset is accessed, information is stored indicating the time. When eviction is required, the LRU eviction policy selects the dataset that has the longest time since last accessed. By periodically sending read requests, the time since last memory access can be reset, placing the sensitive dataset at a higher priority in the cache. The length of time required between read requests depends on the eviction algorithm employed by the cache controller and the frequency other cached datasets are accessed.

In several embodiments of the present invention, access to sensitive data stored in cache memory may be restricted to a set of privileged users. Privileged users may include, but are not limited to, specific processors or hardware, processors operating in a specific mode, specific computer processes, etc. Privileged status may be indicated for specific users or may be implemented using one or more security levels. For example, a processor may be assigned security level 3, and one computer process executed on the processor may be assigned security level 1. If a sensitive dataset indicated that it requires security level 2, the processor would be allowed to access the sensitive dataset, whereas the computer process would not.

In several embodiments of the present invention, methods for authentication of data using secure data storage in cache memory are provided. Critical sections of the main memory of a computer program can be authenticated by storing a checksum hash value of a dataset in secure cache. The checksum can be recomputed later and compared with the checksum stored in cache to verify that the dataset is unchanged. A number of suitable checksums and hash functions may be used for authentication including, but not limited to, cyclic redundancy checks (CRC), Fletcher, Bernstein, Message-Digest (MD), Secure Hash (SH), Tiger, Whirlpool, Hash-based Message Authentication Code (HMAC), etc.

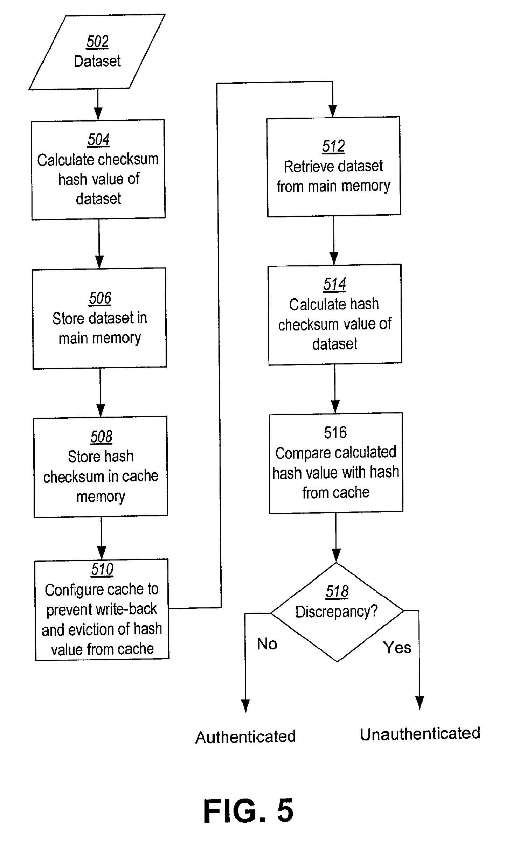

Fig. 5 shows a flowchart of an example process to authenticate stored data in accordance with various embodiments of the invention. A checksum hash value is calculated for dataset 502 at step 504. Dataset 502 is stored in main memory at step 506 and the calculated hash is stored in cache at step 508. The cache is configured to prevent write-back and eviction of the dataset at step 510. The dataset is retrieved from main memory at step 512. A checksum hash value is recalculated for the dataset at step 514. The hash stored in cache is retrieved and compared with the recalculated hash value at step 516. If there is no discrepancy in the compared values at decision step 518, the dataset retrieved at step 512 is authenticated.

In some authentication schemes, the more trusted storage space available to the system, the faster the authentication scheme can work. For example, authentication trees, also known as hash trees or Merkle trees, are trees of hashes in which the leaves are hashes of datasets. To authenticate datasets against a computed hash tree, each dataset hash is computed. Computed hashes of siblings are concatenated and re-hashed to determine the hash of the parent. Hashes are recomputed at each level in the tree until the top level root node is reached. The computed hash of the root node is compared to a root hash stored in secure memory to authenticate the complete dataset. Unfortunately, this can lead to a cascade with dramatic consequences for the performance. Reading and authenticating one block of memory requires traversing the authentication tree up to its root, which may involve many more memory accesses that must be authenticated. If an adequate size of secure memory is available, it is possible to use several roots, thus decreasing the depth of the tree by several layers. Therefore, availability of plentiful high speed secure memory can be performance critical. However, real trusted storage is expensive to provide and implement. As such, the configuration of cache to securely store multiple hash values can be particularly useful for efficiently implementing hash tree authentication.

As discussed above, in many computing architectures multilevel cache is implemented. The various embodiments of the present invention can be implemented to implement secure storage in any level of cache memory. A number of factors may be considered in determining which level(s) of cache are used for secure storage. L1 cache is located in the closest physical proximity to the processor and offers the most protection from physical monitoring. However, lower levels of cache may be capable of caching more data sets. For larger amounts of data, it is possible to use the lower levels of cache for secure storage.

There are numerous cache architectures and polices in addition to those discussed above. The aforementioned architectures and policies are provided for illustrative purposes and are not intended to redefine the general understanding or scope of cache memory otherwise known in the art.

While the present invention has been described above and in the claims that follow, those skilled in the art will recognize that many changes may be made thereto without departing from the spirit and scope of the present invention.

## Claims

1. A method of secure storage of sensitive data in a computing system having a processor and a memory system that includes a main memory and a cache memory, the method comprising:
- accessing a first dataset that is stored in main memory and a cache memory configured to maintain logically consistent therebetween;
- in response to determining that a second dataset is a sensitive dataset, directing the cache memory to store the second dataset in a memory location of the cache memory without maintaining logical consistency with the dataset and main memory.

2. The method of claim 1, wherein:
- the cache memory is configurable to operate in a write-back mode and a write-through mode;
- the cache memory has one or more status bits indicating whether the second dataset is modified; and
- directing the cache memory to reserve a memory location includes:
- configuring the cache memory to operate in the write-back mode, and
- clearing the status bits to indicate the second dataset is unmodified.

3. The method of claim 1, wherein directing the cache memory to store the second dataset in a memory location of the cache memory includes directing the cache memory that the second dataset is to be logically mapped to a non-existent memory location.

4. The method of claim 1, wherein directing the cache memory to store the second dataset in a memory location of the cache memory includes directing the cache memory that the second dataset is to be logically mapped to an address that is write protected.

5. The method of claim 1, further comprising directing the cache memory to disable eviction of the second dataset in response to determining that a second dataset is a sensitive dataset.

6. The method of claim 5, wherein directing the cache memory to disable eviction of the second dataset includes storing data indicating the second dataset is non-evictable.

7. The method of claim 1, further comprising directing, in response to determining that a second dataset is a sensitive dataset, sending periodic memory read requests for the second dataset to the cache memory with a frequency sufficient to prevent the second dataset from being evicted from the cache memory.

8. The method of claim 1, wherein a sensitive dataset is indicated by one or more status bits contained in a memory write instruction.

9. The method of claim 1, wherein sensitive datasets are determined by identifying memory write instructions containing non-existent memory addresses.

10. The method of claim 1, wherein sensitive datasets are determined by identifying memory write instructions containing memory addresses indicating sensitive data.

11. The method of claim 1, further including:
- determining a security level of the second dataset;
- in response to a memory access request for the second dataset from a requestor, determining a security level of the requestor; and
- in response to the security level of the requestor being less than the security level of the dataset, discarding the memory access request.

12. The method of claim 11, further including:
- determining one or more authorized users of the second dataset;
- in response to a memory access request for the second dataset from a requestor, determining whether the requestor is one of the one or more authorized users; and
- in response to determining the requestor is not authorized, discarding the memory access request.

13. A computer processing system comprising;
- at least one central processor;
- a memory architecture that includes a plurality of memory circuits, the memory architecture configured to cache data stored in a memory circuit of a lower hierarchical level, the memory circuit of the lowest hierarchical level configured to operate as non-cache memory;
- control circuitry configured and arranged to, in response to, and for storage of, secure datasets,
- configure the memory architecture to operate a first memory circuit of the plurality of memory circuits as the lowest hierarchical level, and
- configure the memory architecture to operate, in response to, and for storage of, datasets other than secure datasets,
- the first memory circuit as a hierarchical level above the lowest level, and
- a second memory circuit of the plurality of memory circuits as the lowest level memory circuit.

14. The computer processing system of claim 13, further including a policy enforcement circuit coupled between the first and second memory circuits for communicating data written out from the first memory circuit to the second memory circuit; and
wherein the control circuitry is further configured and arranged to configure the memory architecture to operate the first memory circuit of the plurality of memory circuits as the lowest hierarchical level by directing the policy enforcement circuit to discard data written out of the first memory circuit.

15. A method for accessing memory of a computing system, the method comprising:
- configuring a cache control policy for a cache memory to enable write-out and eviction;
- generating a first checksum value from a first dataset stored at a target location of main memory;
- storing the first checksum value in a cache memory of the computing system;
- configuring the cache control policy for the cache memory to disable write-out and eviction of the first checksum value;
- fetching a second dataset stored at target location of main memory; generating a second checksum value from the second dataset;
- fetching the first checksum from the cache memory;
- comparing the first checksum to the second checksum; and
- validating the second dataset in response to the first checksum being equal to the second checksum.
